# EUROPEAN PATENT APPLICATION

(11) **EP 4 475 285 A1**
(43) Date of publication of application: **11.12.2024**
(21) Application number: 24169501.4
(22) Date of filing: 10.04.2024
(51) Int. Cl.: H01M 50/103, H01M 50/15, H01M 50/169

(54) **SECONDARY BATTERY AND METHOD OF MANUFACTURING SAME**

(30) Priority: 08.06.2023 JP 2023094755
(71) Applicant: Prime Planet Energy & Solutions, Inc., Chuo-ku Tokyo 103-0022 (JP)
(72) Inventor: TACHIBANA, Shogo, Tokyo, 103-0022 (JP); WAKIMOTO, Ryoichi, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

A first end surface (117) is located at an end portion of a case main body (110) on a first side and extends in a direction intersecting a first direction. A second end surface (118) is located at an end portion of the case main body (110) on a second side and extends in the direction intersecting the first direction. A first sealing plate (120) has a first covering portion (127). The first covering portion (127) covers at least a portion of the first end surface (117) in the first direction. A second sealing plate (130) has a second covering portion (137). The second covering portion (137) covers at least a portion of the second end surface (118) in the first direction. A first joining portion (140) is formed to bridge an outer peripheral surface portion (116) and the first covering portion (127). A second joining portion (141) is formed to bridge the outer peripheral surface portion (116) and the second covering portion (137).

## Description

### CROSS REFERENCE TO RELATED APPLICATIONS

This nonprovisional application is based on Japanese Patent Application No. 2023-094755 filed on June 8, 2023 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent No. 4537353 is a prior art document that discloses a configuration of a secondary battery. The secondary battery described in Japanese Patent No. 4537353 includes an electrode assembly, a case, and a cap plate. The electrode assembly is included in the case. The case has end portions each provided with an opening for inserting an electrode group. The cap plate is coupled to the opening. The cap plate is disposed inside the case to seal the opening.

### SUMMARY OF THE INVENTION

In the secondary battery described in Japanese Patent No. 4537353, the sealing plate cannot be positioned with respect to the case main body, with the result that a joining portion that joins the case main body and the sealing plate may not be stably formed. Therefore, there is room for improving reliability of the joining portion.

The present technology has been made to solve the above-described problem and has an object to provide a secondary battery and a method of manufacturing the secondary battery so as to improve reliability of a joining portion that joins a case main body and a sealing plate.

The present technology provides the following secondary battery.
[1] A secondary battery comprising:
   an electrode assembly including a first electrode and a second electrode having a polarity different from a polarity of the first electrode; and
   a case that accommodates the electrode assembly, wherein the case includes
      a case main body provided with a first opening and a second opening, the first opening being located at an end portion of the case main body on a first side in a first direction, the second opening being located at an end portion of the case main body on a second side opposite to the first side in the first direction,
      a first sealing plate that seals the first opening, and
      a second sealing plate that seals the second opening,
   the case main body has an outer peripheral surface portion, a first end surface, and a second end surface, the outer peripheral surface portion extending around an axis in the first direction, the first end surface being located at the end portion of the case main body on the first side, the first end surface extending in a direction intersecting the first direction, the second end surface being located at the end portion of the case main body on the second side, the second end surface extending in the direction intersecting the first direction,
   the first sealing plate has a first covering portion that covers at least a portion of the first end surface in the first direction,
   the second sealing plate has a second covering portion that covers at least a portion of the second end surface in the first direction,
   a first joining portion is formed to bridge the outer peripheral surface portion and the first covering portion, and
   a second joining portion is formed to bridge the outer peripheral surface portion and the second covering portion.
[2] The secondary battery according to [1], wherein the case main body has a joining portion extending on the outer peripheral surface portion in the first direction.
[3] The secondary battery according to [1] or [2], wherein
   the electrode assembly includes
   a main body portion,
   a first electrode tab group electrically connected to the first electrode and located on the first side with respect to the main body portion, and
   a second electrode tab group electrically connected to the second electrode and located on the second side with respect to the main body portion.
[4] The secondary battery according to any one of [1] to [3], comprising:
   a first electrode terminal electrically connected to the first electrode and attached to the first sealing plate; and
   a second electrode terminal electrically connected to the second electrode and attached to the second sealing plate.
[5] The secondary battery according to any one of [1] to [4], comprising:
   a first spacer located between the electrode assembly and the first sealing plate; and
   a second spacer located between the electrode assembly and the second sealing plate.
[6] The secondary battery according to any one of [1] to [5], wherein
   the case main body has an inner peripheral surface portion extending around the axis in the first direction,
   the first sealing plate has a first portion located on an inner side of the case main body with respect to the first opening and facing the inner peripheral surface portion of the case main body,
   the second sealing plate has a second portion located on the inner side of the case main body with respect to the second opening and facing the inner peripheral surface portion of the case main body, and
   each of the first joining portion and the second joining portion is a welded portion.
   The present technology provides the following method of manufacturing a secondary battery.
[7] A method of manufacturing a secondary battery, the method comprising:
   preparing a case main body provided with a first opening, a second opening, an outer peripheral surface portion, a first end surface, and a second end surface, the first opening being located at an end portion of the case main body on a first side in a first direction, the second opening being located at an end portion of the case main body on a second side opposite to the first side in the first direction, the outer peripheral surface portion extending around an axis in the first direction, the first end surface being located at the end portion of the case main body on the first side, the first end surface extending in a direction intersecting the first direction, the second end surface being located at the end portion of the case main body on the second side, the second end surface extending in the direction intersecting the first direction;
   inserting an electrode assembly into the case main body, the electrode assembly including a first electrode and a second electrode having a polarity different from a polarity of the first electrode;
   sealing the first opening by bringing a first sealing plate into abutment with the first end surface so as to cover at least a portion of the first end surface in the first direction and performing a joining process from an outer peripheral side around the axis in the first direction so as to form a joining portion to bridge the first sealing plate and the outer peripheral surface portion of the case main body; and
   sealing the second opening by bringing a second sealing plate into abutment with the second end surface so as to cover at least a portion of the second end surface in the first direction and performing a joining process from the outer peripheral side around the axis in the first direction so as to form a joining portion to bridge the second sealing plate and the outer peripheral surface portion of the case main body.
[8] The method of manufacturing the secondary battery according to [7], wherein the case main body is formed by folding a plate-shaped member into a tubular shape and joining both ends of the plate-shaped member folded into the tubular shape.
[9] The method of manufacturing the secondary battery according to [8], wherein the joining of the both ends of the plate-shaped member includes performing welding by applying an energy ray a plurality of times.
[10] The method of manufacturing the secondary battery according to [8], wherein
   the joining of the both ends of the plate-shaped member includes performing welding by applying an energy ray a plurality of times,
   the performing of the welding by applying the energy ray a plurality of times includes
      welding a first region including the end portion of the case main body on the first side, and
      welding a second region including the end portion of the case main body on the second side,
   in the welding of each of the first region and the second region, each of the end portion of the case main body on the first side and the end portion of the case main body on the second side serves as a start point or end point of the welding,
   when the end portion of the case main body on the first side serves as the start point of the welding, the end portion of the case main body on the second side serves as the start point of the welding, and
   when the end portion of the case main body on the first side serves as the end point of the welding, the end portion of the case main body on the second side serves as the end point of the welding.
[11] The method of manufacturing the secondary battery according to any one of [7] to [10], wherein in the sealing of the first opening, the forming of the joining portion includes performing welding by applying an energy ray a plurality of times.
[12] The method of manufacturing the secondary battery according to [11], wherein
   the first sealing plate and the case main body are joined to each other by a plurality of the joining portions by performing welding by applying an energy ray a plurality of times, and
   adjacent joining portions of the plurality of the joining portions are formed such that parts of the adjacent joining portions overlap with each other.
[13] The method of manufacturing the secondary battery according to any one of [7] to [12], wherein at least one of the sealing of the first opening and the sealing of the second opening includes rotating the case main body around the axis in the first direction.
[14] The method of manufacturing the secondary battery according to [13], wherein at least one of the sealing of the first opening and the sealing of the second opening includes pressing the case main body until the case main body is deformed, and sandwiching the electrode assembly by the case main body.
[15] The method of manufacturing the secondary battery according to [13] or [14], comprising:
   temporarily joining the first sealing plate and the case main body to each other before the sealing of the first opening; and
   temporarily joining the second sealing plate and the case main body to each other before the sealing of the second opening.
[16] The method of manufacturing the secondary battery according to any one of [7] to [15], wherein at least parts of the sealing of the first opening and the sealing of the second opening are performed simultaneously.
[17] The method of manufacturing the secondary battery according to any one of [7] to [16], wherein
   the case main body has an inner peripheral surface portion extending around the axis in the first direction,
   the first sealing plate has a first portion located on an inner side of the case main body with respect to the first opening and facing the inner peripheral surface portion of the case main body,
   the second sealing plate has a second portion located on the inner side of the case main body with respect to the second opening and facing the inner peripheral surface portion of the case main body, and
   in the sealing of the first opening and the sealing of the second opening, the first sealing plate and the case main body are welded to each other and the second sealing plate and the case main body are welded to each other by applying an energy ray from the outer peripheral side around the axis in the first direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to one embodiment of the present technology.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a front cross sectional view of the secondary battery shown in Fig. 1.
Fig. 6 is a front view showing a negative electrode raw plate before a negative electrode plate is formed.
Fig. 7 is a cross sectional view of the negative electrode raw plate shown in Fig. 6 along VII-VII.
Fig. 8 is a front view showing the negative electrode plate formed from the negative electrode raw plate.
Fig. 9 is a front view showing a positive electrode raw plate before a positive electrode plate is formed.
Fig. 10 is a cross sectional view of the positive electrode raw plate shown in Fig. 9 along X-X.
Fig. 11 is a front view showing the positive electrode plate formed from the positive electrode raw plate.
Fig. 12 is a diagram showing an electrode assembly and a current collector each removed from the secondary battery.
Fig. 13 is a front view of a connection structure between a negative electrode tab group and a negative electrode current collector.
Fig. 14 is a cross sectional view of the connection structure between the negative electrode tab group and the negative electrode current collector.
Fig. 15 is a diagram showing a step of inserting the electrode assembly into a case main body.
Fig. 16 is a diagram showing a step of disposing a spacer between a sealing plate and the electrode assembly.
Fig. 17 is a cross sectional view showing joining portions of a case included in the secondary battery according to the embodiment.
Fig. 18 is a perspective view showing a joining state between a case main body and a first sealing plate included in a secondary battery according to a comparative example.
Fig. 19 is a flowchart showing a method of manufacturing the secondary battery according to the embodiment.
Fig. 20 is a bottom view showing a joining method when forming the case main body.
Fig. 21 is a bottom view showing a joining method when forming a case main body according to a first modification of the embodiment.
Fig. 22 is a perspective view showing a method of joining the case main body and the first sealing plate included in the secondary battery according to the embodiment.
Fig. 23 is a side view showing a state immediately after the joining between the case main body and the first sealing plate is started.
Fig. 24 is a side view showing a state in which short side portions of the case main body and the first sealing plate are joined to each other while rotating them.
Fig. 25 is a side view showing a state in which long side portions of the case main body and the first sealing plate are joined to each other while rotating them.
Fig. 26 is a bottom view showing joining paths when joining the case main body and the first sealing plate.
Fig. 27 is a bottom view showing a first welding path when joining the case main body and the first sealing plate according to the modification.
Fig. 28 is a bottom view showing a second welding path when joining the case main body and the first sealing plate according to the modification.
Fig. 29 is a bottom view showing a third welding path when joining the case main body and the first sealing plate according to the modification.
Fig. 30 is a perspective view showing a joining state between a case main body and a first sealing plate included in a secondary battery according to a second modification of the embodiment.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represents a positive electrode and a negative electrode.

It should be noted that in the figures, it is defined that: an X direction serving as a first direction represents a direction along a winding axis of an electrode assembly included in the secondary battery; a Y direction serving as a second direction represents a short-side direction of the electrode assembly when viewed in the first direction, the second direction being orthogonal to the first direction; and a Z direction serving as a third direction represents a long-side direction of the electrode assembly when viewed in the first direction, the third direction being orthogonal to the first direction. In order to facilitate understanding of the invention, the size of each component in the figures may be illustrated to be changed from its actual size.

In the specification of the present application, the first direction (X direction) may be referred to as a "width direction" of the secondary battery or the case main body, the second direction (Y direction) may be referred to as a "thickness direction" of the secondary battery or the case main body, and the third direction (Z direction) may be referred to as a "height direction" of the secondary battery or the case main body.

### (Overall Configuration of Battery)

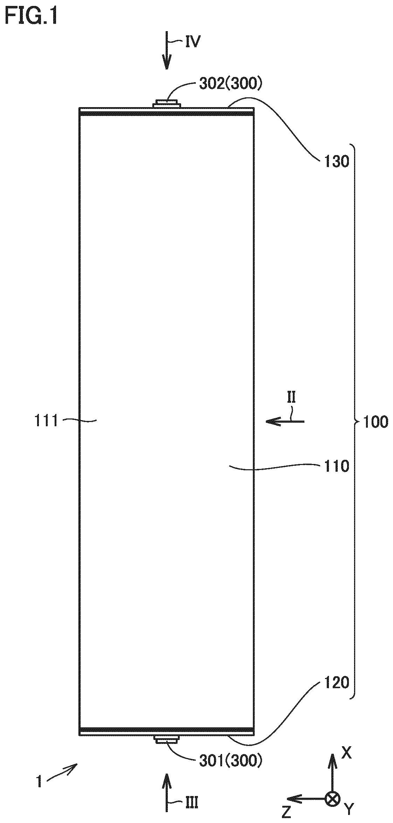

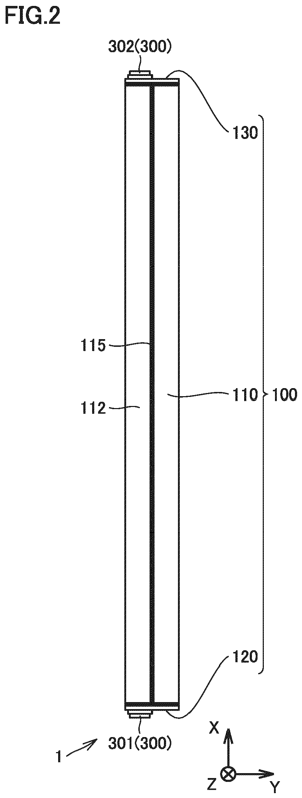

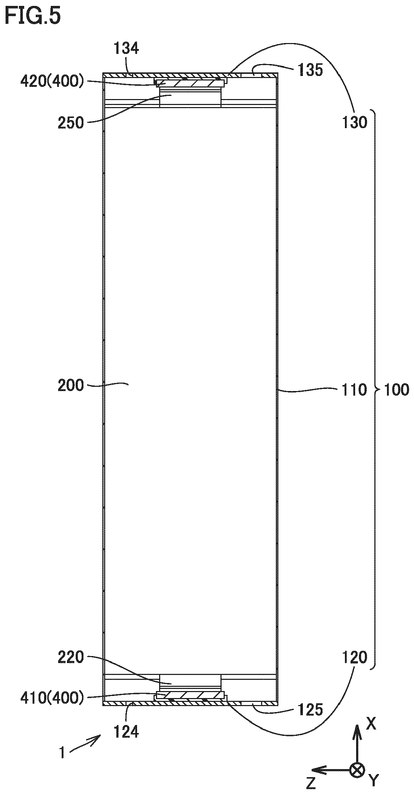

Fig. 1 is a front view of a secondary battery 1 according to the present embodiment. Figs. 2 to 4 are diagrams showing states of secondary battery 1 shown in Fig. 1 when viewed in directions of arrows II, III, and IV, respectively. Fig. 5 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 5, secondary battery 1 includes a case 100, an electrode assembly 200, electrode terminals 300, and current collectors 400. Case 100 includes a case main body 110, a first sealing plate 120, and a second sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, first sealing plate 120 and second sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature. Joining portion 115 in the present embodiment extends on an outer peripheral surface portion of case main body 110 in the first direction (X direction).

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

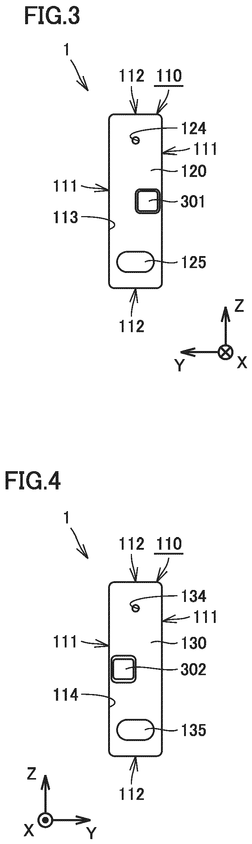

As shown in Fig. 3, a first opening 113 is provided at an end portion of case main body 110 on a first side in the first direction (X direction). First opening 113 is sealed by first sealing plate 120. Each of first opening 113 and first sealing plate 120 has a substantially rectangular shape in which the Y direction corresponds to its short-side direction and the Z direction corresponds to its long-side direction.

First sealing plate 120 is provided with a negative electrode terminal 301 (first electrode terminal), a liquid injection hole 124, and a gas-discharge valve 125. The positions of negative electrode terminal 301, liquid injection hole 124, and gas-discharge valve 125 can be appropriately changed.

As shown in Fig. 4, a second opening 114 is provided at an end portion of case main body 110 on a second side opposite to the first side in the first direction (X direction). Second opening 114 is sealed by second sealing plate 130. Each of second opening 114 and second sealing plate 130 has a substantially rectangular shape in which the Y direction corresponds to its short-side direction and the Z direction corresponds to its long-side direction.

Second sealing plate 130 is provided with a positive electrode terminal 302 (second electrode terminal), a liquid injection hole 134, and a gas-discharge valve 135. The positions of positive electrode terminal 302, liquid injection hole 134, and gas-discharge valve 135 can be appropriately changed.

Each of first sealing plate 120 and second sealing plate 130 is composed of a metal. Specifically, each of first sealing plate 120 and second sealing plate 130 is composed of aluminum, an aluminum alloy, iron, an iron alloy, or the like.

In the present embodiment, the thickness of each of first sealing plate 120 and second sealing plate 130 is thicker than the thickness (plate thickness) of case main body 110. Thus, in each of first sealing plate 120 and second sealing plate 130 each having an occupied volume smaller than that of case main body 110, an thermal influence when forming each of a below-described first joining portion 140 and a below-described second joining portion 141 is reduced, thereby suppressing formation of a hole or the like at the time of joining.

Negative electrode terminal 301 is electrically connected to a negative electrode of electrode assembly 200. Negative electrode terminal 301 is attached to first sealing plate 120, i.e., case 100.

Positive electrode terminal 302 is electrically connected to a positive electrode of electrode assembly 200. Positive electrode terminal 302 is attached to second sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Each of liquid injection holes 124, 134 is sealed by a sealing member (not shown). As the sealing member, for example, a blind rivet or another metal member can be used.

Each of gas-discharge valves 125, 135 is fractured to discharge a gas in case 100 to outside when pressure in case 100 becomes equal to or more than a predetermined value.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The strip-shaped separator can be constituted of, for example, a microporous membrane composed of polyolefin. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group.

As shown in Fig. 5, case 100 accommodates electrode assembly 200. Electrode assembly 200 is accommodated in case 100 such that the winding axis thereof is parallel to the X direction.

Specifically, one or a plurality of the wound type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

Electrode assembly 200 includes: a main body portion (portion in which a positive electrode plate and a negative electrode plate are stacked with a separator being interposed therebetween); a negative electrode tab group 220 (first electrode tab group); and a positive electrode tab group 250 (second electrode tab group).

The main body portion is constituted of a below-described negative electrode plate 210 and a below-described positive electrode plate 240. Negative electrode tab group 220 is located at an end portion of electrode assembly 200 on the first side with respect to the main body portion in the first direction (X direction). The first side in the present embodiment is the first sealing plate 120 side. Positive electrode tab group 250 is located at an end portion of electrode assembly 200 on the second side with respect to the main body portion in the first direction (X direction). The second side in the present embodiment is the second sealing plate 130 side.

Each of negative electrode tab group 220 and positive electrode tab group 250 is formed to protrude from a central portion of electrode assembly 200 toward first sealing plate 120 or second sealing plate 130.

Current collector 400 includes a negative electrode current collector 410 (first current collector) and a positive electrode current collector 420 (second current collector). Each of negative electrode current collector 410 and positive electrode current collector 420 is constituted of a plate-shaped member. Electrode assembly 200 is electrically connected to negative electrode terminal 301 and positive electrode terminal 302 through current collectors 400.

Negative electrode current collector 410 is disposed on first sealing plate 120 with an insulating member composed of a resin being interposed therebetween. Negative electrode current collector 410 is electrically connected to negative electrode tab group 220 and negative electrode terminal 301. Negative electrode current collector 410 is composed of a conductive material (more specifically, a metal), and can be composed of copper, a copper alloy, or the like, for example.

Positive electrode current collector 420 is disposed on second sealing plate 130 with an insulating member composed of a resin being interposed therebetween. Positive electrode current collector 420 is electrically connected to positive electrode tab group 250 and positive electrode terminal 302. Positive electrode current collector 420 is composed of a conductive material (more specifically, a metal), and can be composed of aluminum, an aluminum alloy, or the like, for example. It should be noted that positive electrode tab group 250 may be electrically connected to second sealing plate 130 directly or via positive electrode current collector 420. In this case, second sealing plate 130 may serve as positive electrode terminal 302.

### (Configuration of Electrode Assembly 200)

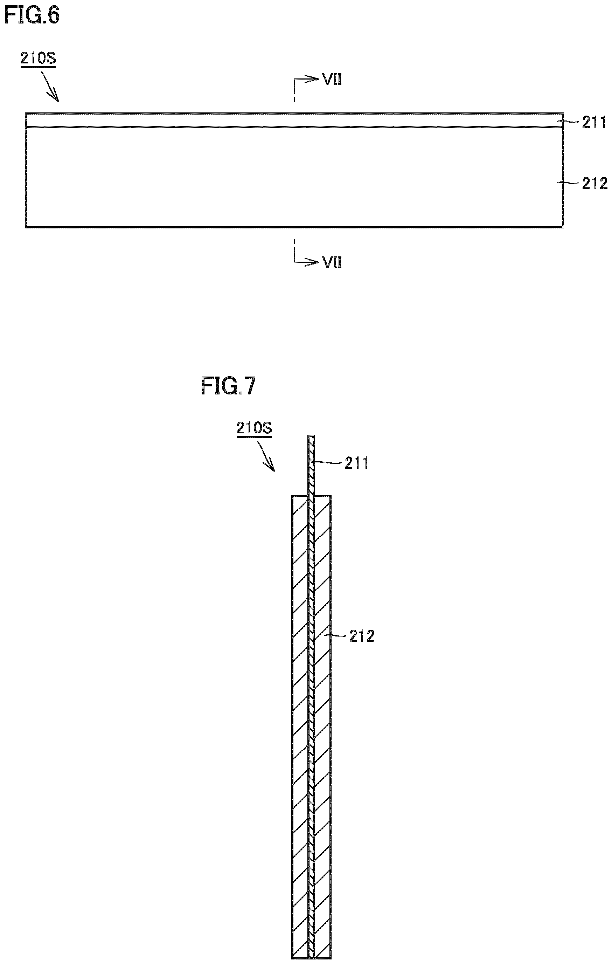

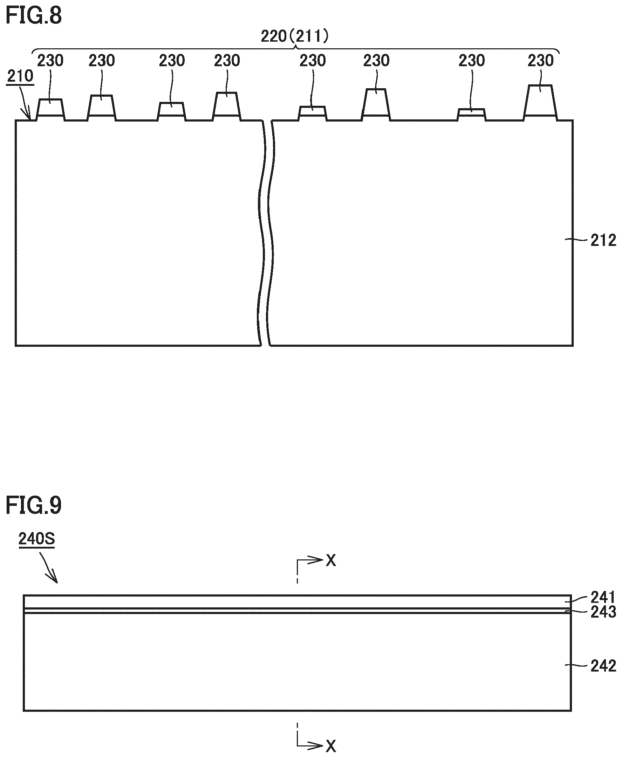

Fig. 6 is a front view showing a negative electrode raw plate 210S before negative electrode plate 210 (first electrode) is formed, Fig. 7 is a cross sectional view of negative electrode raw plate 210S shown in Fig. 6 along VII-VII, and Fig. 8 is a front view showing negative electrode plate 210 formed from negative electrode raw plate 210S.

Negative electrode plate 210 is manufactured by processing negative electrode raw plate 2105. As shown in Figs. 6 and 7, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 8, a plurality of negative electrode tabs 230 each constituted of negative electrode core body 211 are provided at one end portion, in the width direction, of negative electrode plate 210 formed from negative electrode raw plate 210S. When negative electrode plate 210 is wound, the plurality of negative electrode tabs 230 are stacked to form negative electrode tab group 220. Thus, negative electrode tab group 220 is connected to negative electrode plate 210 (first electrode). The position of each of the plurality of negative electrode tabs 230 and the length thereof in the protruding direction are appropriately adjusted in consideration of the state in which negative electrode tab group 220 is connected to negative electrode current collector 410. It should be noted that the shape of negative electrode tab 230 is not limited to the one illustrated in Fig. 8.

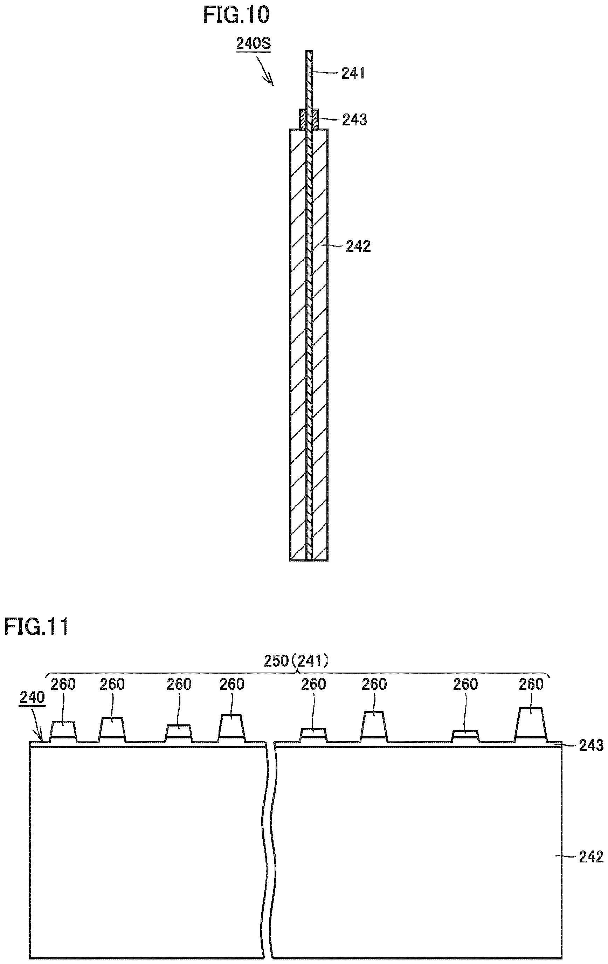

Fig. 9 is a front view showing a positive electrode raw plate 240S before positive electrode plate 240 (second electrode) is formed, Fig. 10 is a cross sectional view of positive electrode raw plate 240S shown in Fig. 9 along X-X, and Fig. 11 is a front view showing positive electrode plate 240 formed from positive electrode raw plate 240S.

Positive electrode plate 240 serving as the second electrode has a polarity different from a polarity of negative electrode plate 210 serving as the first electrode. Positive electrode plate 240 is manufactured by processing positive electrode raw plate 240S. As shown in Figs. 9 and 10, positive electrode raw plate 240S includes a positive electrode core body 241, a positive electrode active material layer 242, and a positive electrode protective layer 243. Positive electrode core body 241 is an aluminum foil or an aluminum alloy foil.

Positive electrode active material layer 242 is formed on positive electrode core body 241 except for each of end portions of both surfaces of positive electrode core body 241 on one side. Positive electrode active material layer 242 is formed on positive electrode core body 241 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5:1:1.5.

Positive electrode protective layer 243 is formed in contact with positive electrode core body 241 at an end portion of positive electrode active material layer 242 on the one side in the width direction. Positive electrode protective layer 243 is formed on positive electrode core body 241 by applying a positive electrode protective layer slurry using a die coater. Positive electrode protective layer 243 has an electrical resistance larger than that of positive electrode active material layer 242.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 241 having the positive electrode active material layer slurry and the positive electrode protective layer slurry applied thereon is dried to remove the NMP included in the positive electrode active material layer slurry and the positive electrode protective layer slurry, thereby forming positive electrode active material layer 242 and positive electrode protective layer 243. Further, by compressing positive electrode active material layer 242, positive electrode raw plate 240S including positive electrode core body 241, positive electrode active material layer 242, and positive electrode protective layer 243 is formed. Positive electrode raw plate 240S is cut into a predetermined shape, thereby forming positive electrode plate 240. Positive electrode raw plate 240S can be cut by laser processing with application of an energy ray, die processing, cutter processing, or the like.

As shown in Fig. 11, a plurality of positive electrode tabs 260 each constituted of positive electrode core body 241 are provided at one end portion, in the width direction, of positive electrode plate 240 formed from positive electrode raw plate 240S. When positive electrode plate 240 is wound, the plurality of positive electrode tabs 260 are stacked to form positive electrode tab group 250. Thus, positive electrode tab group 250 is connected to positive electrode plate 240 (second electrode). The position of each of the plurality of positive electrode tabs 260 and the length thereof in the protruding direction are appropriately adjusted in consideration of the state in which positive electrode tab group 250 is connected to positive electrode current collector 420. It should be noted that the shape of positive electrode tab 260 is not limited to the one illustrated in Fig. 11.

Positive electrode protective layer 243 is provided at the root of each of the plurality of positive electrode tabs 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

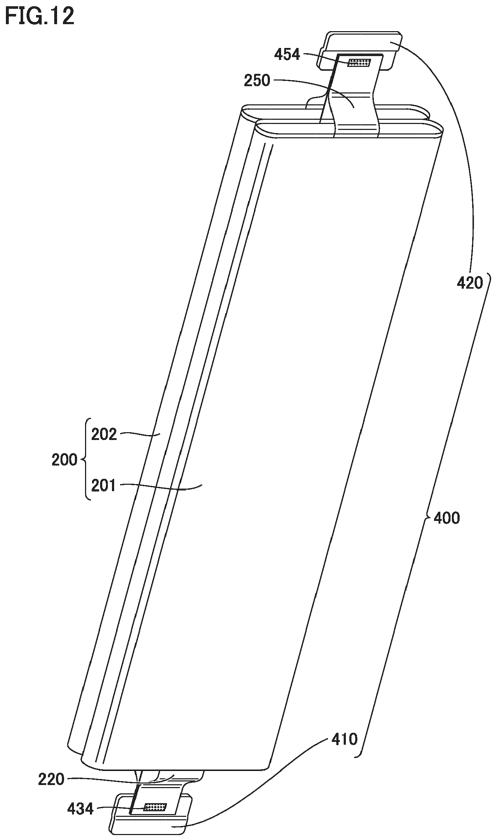

Fig. 12 is a diagram showing electrode assembly 200 and current collector 400 each removed from secondary battery 1. As shown in Fig. 12, electrode assembly 200 is formed by stacking two electrode assemblies 201, 202, each of which is a wound type electrode assembly. Although Fig. 12 illustratively shows the structure in which two wound type electrode assemblies are stacked, electrode assembly 200 may be constituted of one wound type electrode assembly, may be constituted of three or more wound type electrode assemblies, or may be constituted of a stacked type electrode assembly.

Negative electrode tab group 220 is joined to negative electrode current collector 410 at a joining location 434 and positive electrode tab group 250 is joined to positive electrode current collector 420 at a joining location 454.

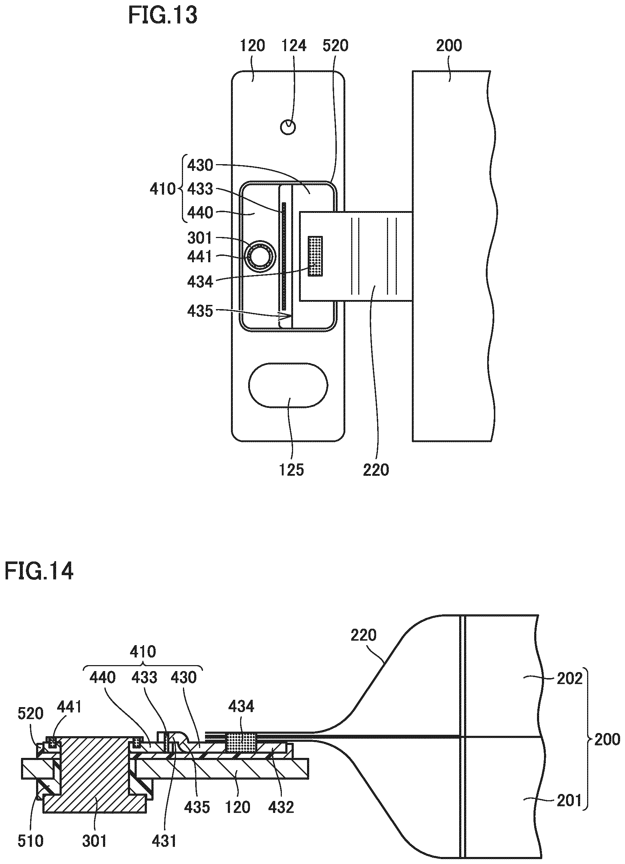

Fig. 13 is a front view of a connection structure between the negative electrode tab group and the negative electrode current collector. Fig. 14 is a cross sectional view of the connection structure between the negative electrode tab group and the negative electrode current collector.

As shown in Figs. 13 and 14, negative electrode current collector 410 electrically connects negative electrode terminal 301 and negative electrode tab group 220. Negative electrode current collector 410 in the present embodiment is connected to negative electrode terminal 301 between electrode assembly 200 and first sealing plate 120.

Negative electrode current collector 410 includes a first conductive member 430 and a second conductive member 440. First conductive member 430 and second conductive member 440 are joined to each other at a joining location 433. First conductive member 430 and second conductive member 440 are joined by, for example, laser welding.

First conductive member 430 is joined to negative electrode tab group 220 at a joining location 434. Joining location 434 can be formed by, for example, ultrasonic welding, resistance welding, laser welding, swaging, or the like. In the present embodiment, first conductive member 430 and negative electrode tab group 220 are joined by, for example, ultrasonic bonding.

Second conductive member 440 is connected to negative electrode terminal 301 at a joining location 441. Joining location 441 can be formed by, for example, ultrasonic welding, resistance welding, laser welding, swaging, or the like. In the present embodiment, negative electrode terminal 301 and second conductive member 440 are joined by, for example, providing a through hole in second conductive member 440, inserting negative electrode terminal 301 into the through hole, swaging negative electrode terminal 301 on second conductive member 440, and then welding the swaged portion and second conductive member 440.

First conductive member 430 has a first flat surface portion 431 and a second flat surface portion 432. First flat surface portion 431 is connected to second conductive member 440. Second flat surface portion 432 is connected to negative electrode tab group 220. Second flat surface portion 432 is disposed along first sealing plate 120.

A stepped portion 435 is provided between first flat surface portion 431 and second flat surface portion 432. In a state after secondary battery 1 is assembled, the positions of first flat surface portion 431 and second flat surface portion 432 in the first direction (X direction) are made different by stepped portion 435. Thus, first flat surface portion 431 and second flat surface portion 432 can be arranged side by side in one direction. Stepped portion 435 extends along the third direction (Z direction).

A first insulating member 510 (resin member) is disposed between negative electrode terminal 301 and first sealing plate 120. A second insulating member 520 (resin member) is disposed between first sealing plate 120 and each of first conductive member 430 and second conductive member 440. It should be noted that first insulating member 510 and second insulating member 520 may be an integrated component.

Negative electrode terminal 301 is attached to first sealing plate 120 with first insulating member 510 being interposed therebetween. Negative electrode terminal 301 is provided to be exposed to the outside of first sealing plate 120 and reach second conductive member 440 of negative electrode current collector 410 provided on the inner surface side of first sealing plate 120.

As a procedure for assembling each component, first, negative electrode terminal 301 and second conductive member 440 as well as first insulating member 510 and second insulating member 520 are attached to first sealing plate 120. Next, first conductive member 430 electrically connected to electrode assembly 200 is attached to second conductive member 440. On this occasion, first conductive member 430 is disposed on first insulating member 510 such that a portion of first conductive member 430 overlaps with second conductive member 440. Next, first conductive member 430 and second conductive member 440 are welded and connected to each other at joining location 434.

It should be noted that negative electrode terminal 301 may be electrically connected to first sealing plate 120. Further, first sealing plate 120 may serve as negative electrode terminal 301.

It should be noted that each of Figs. 13 and 14 illustrates negative electrode current collector 410 constituted of two components (first conductive member 430 and second conductive member 440); however, negative electrode current collector 410 may be constituted of one component.

Each of Figs. 13 and 14 shows the connection structure on the negative electrode side; however, the basic connection structure on the positive electrode side is the same as that on the negative electrode side.

### (Step of Inserting Electrode Assembly 200)

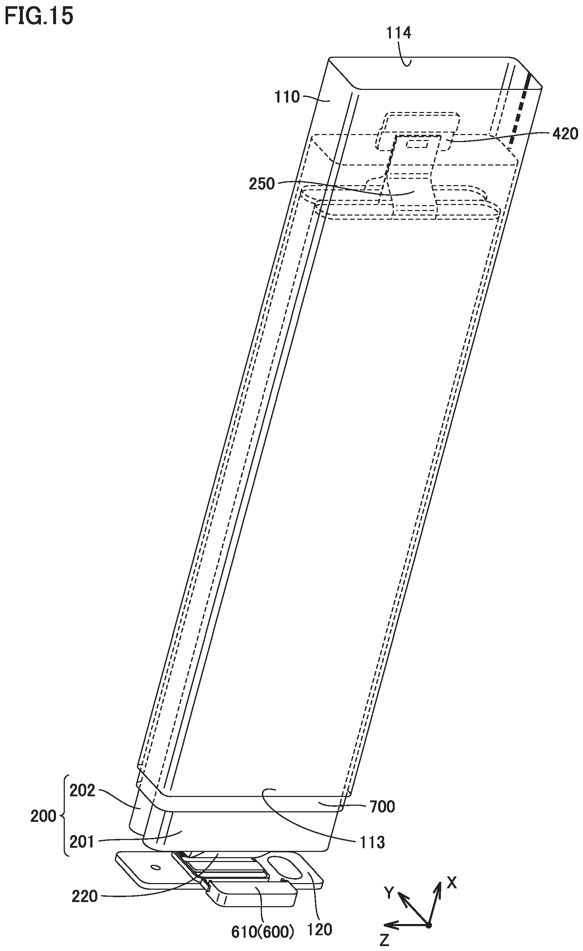

Fig. 15 is a diagram showing a step of inserting electrode assembly 200 into case main body 110. As shown in Fig. 15, insulating sheet 700 (electrode assembly holder) composed of a resin is disposed between electrode assembly 200 and case main body 110.

Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

Insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively.

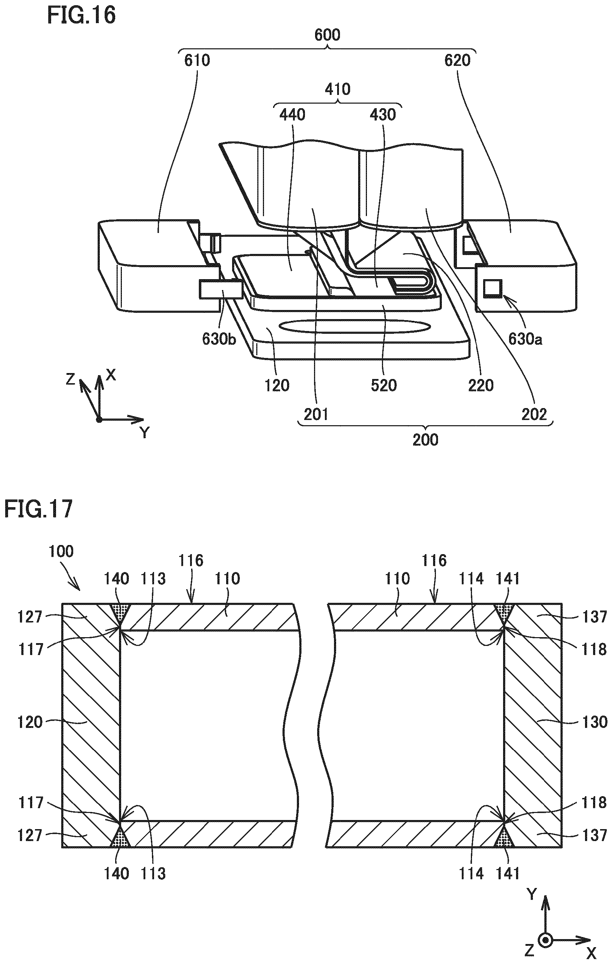

Fig. 16 is a diagram showing a step of disposing a first spacer 600 between first sealing plate 120 and electrode assembly 200.

As shown in Fig. 16, negative electrode tab group 220 extends from electrode assembly 200 toward first sealing plate 120 in the following manner: negative electrode tab group 220 extends from the central portion of first sealing plate 120 to an end portion of first sealing plate 120 in the Y direction and is then bent to be folded back toward the central portion in an opposite direction. First spacer 600 is provided to store the curved part of negative electrode tab group 220. First spacer 600 is disposed between electrode assembly 200 and first sealing plate 120.

First spacer 600 includes a first component 610 and a second component 620. First component 610 and second component 620 are slid along the Y direction from the respective end portion sides to the center side of first sealing plate 120, and are accordingly engaged with each other by engagement portions 630a, 630b. Thus, first spacer 600 is fixed to first sealing plate 120 with second insulating member 520 being interposed therebetween, thereby increasing stability of the position of first spacer 600.

Secondary battery 1 according to the present embodiment includes a second spacer (not shown). The second spacer is disposed between the electrode assembly and the second sealing plate. The second spacer may have the same structure as that of first spacer 600. First spacer 600 and the second spacer may have shapes different from each other.

### (Joining Structure between Case Main Body 110 and Each of Sealing Plates 120, 130)

Fig. 17 is a cross sectional view showing joining portions of the case included in the secondary battery according to the embodiment. It should be noted that in Fig. 17, configurations other than case 100 are not shown to facilitate understanding of the invention.

As shown in Fig. 17, case main body 110 has an outer peripheral surface portion 116, a first end surface 117, and a second end surface 118.

Outer peripheral surface portion 116 extends around an axis in the first direction (X direction). Further, outer peripheral surface portion 116 extends along the first direction (X direction). It should be noted that outer peripheral surface portion 116 extends substantially parallel to the first direction (X direction), but may be inclined with respect to the first direction (X direction) due to a processing error at the time of manufacturing case main body 110. Further, irregularities or a step may be formed in the surface of outer peripheral surface portion 116.

First end surface 117 is located at an end portion of case main body 110 on the first side in the first direction (X direction). First end surface 117 extends in a direction intersecting the first direction (X direction). In the present embodiment, first end surface 117 extends in a direction substantially orthogonal to the first direction (X direction). Since first end surface 117 extends in the direction substantially orthogonal to the first direction (X direction), first sealing plate 120 is facilitated to be brought into abutment therewith.

Second end surface 118 is located at an end portion of case main body 110 on the second side in the first direction (X direction). Second end surface 118 extends in the direction intersecting the first direction (X direction). In the present embodiment, second end surface 118 extends in the direction substantially orthogonal to the first direction (X direction). Since second end surface 118 extends in the direction substantially orthogonal to the first direction (X direction), second sealing plate 130 is facilitated to be brought into abutment therewith.

First sealing plate 120 has a first covering portion 127. First covering portion 127 covers at least a portion of first end surface 117 in the first direction (X direction). Therefore, first sealing plate 120 is facilitated to be stably positioned with respect to case main body 110. First covering portion 127 in the present embodiment covers a whole of first end surface 117 in the first direction (X direction).

Second sealing plate 130 has a second covering portion 137. Second covering portion 137 covers at least a portion of second end surface 118 in the first direction (X direction). Therefore, second sealing plate 130 is facilitated to be stably positioned with respect to case main body 110. Second covering portion 137 in the present embodiment covers a whole of second end surface 118 in the first direction (X direction).

A first joining portion 140 is formed to bridge outer peripheral surface portion 116 and first covering portion 127. First end surface 117 and first covering portion 127 are joined to each other by first joining portion 140. A second joining portion 141 is formed to bridge outer peripheral surface portion 116 and second covering portion 137. Second end surface 118 and second covering portion 137 are joined to each other by second joining portion 141. First joining portion 140 and second joining portion 141 are formed by, for example, laser welding. It should be noted that first joining portion 140 and second joining portion 141 are not each limited to being formed by laser welding, and may be formed by a joining method such as ultrasonic welding or resistance welding.

Since each of first joining portion 140 and second joining portion 141 is located at outer peripheral surface portion 116 of case main body 110, each of first joining portion 140 and second joining portion 141 can be disposed at a position away from the insulating member composed of a resin and provided between electrode terminal 300 and a corresponding one of sealing plate 120, 130 as compared with the case where the whole of each sealing plate is inserted inside the case main body and the joining portion is formed between the outer peripheral surface of the sealing plate and the end surface of the case main body. Thus, thermal influence on the insulating member at the time of joining can be reduced.

Hereinafter, a secondary battery according to a comparative example will be described. In the secondary battery according to the comparative example, the structure of the case is different from that of secondary battery 1 according to the embodiment of the present technology and the same configuration as that of secondary battery 1 according to the embodiment of the present technology will not be therefore described repeatedly.

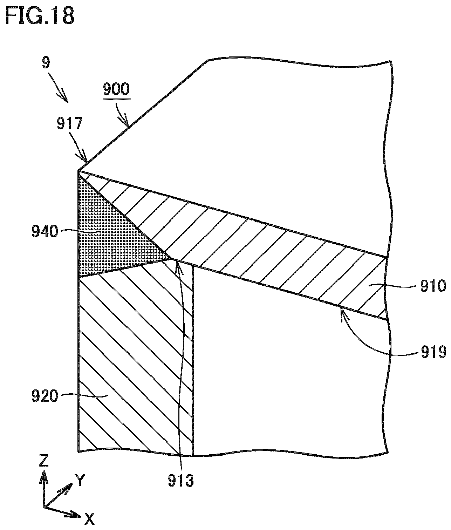

Fig. 18 is a perspective view showing a joining state between a case main body and a first sealing plate included in the secondary battery according to the comparative example.

As shown in Fig. 18, a secondary battery 9 according to the comparative example includes a case 900. Case 900 includes a case main body 910 and a first sealing plate 920.

Case main body 910 has a first end surface 917 and an inner peripheral surface portion 919. First end surface 917 is located at an end portion of case main body 910 on the first side in the first direction (X direction). Inner peripheral surface portion 919 extends around an axis of case main body 910 in the first direction (X direction) and extends inside case main body 910.

First sealing plate 920 covers a first opening 913. The outer peripheral portion of first sealing plate 920 is in contact with inner peripheral surface portion 919 of case main body 910. Inner peripheral surface portion 919 and the outer peripheral portion of first sealing plate 920 are joined by a first joining portion 940. First joining portion 940 is formed to bridge the outer surface of first sealing plate 920 and the end surface of case main body 910.

When first sealing plate 920 is inserted in case main body 910, first sealing plate 920 can be disposed at any position in the first direction (X direction) during formation of first joining portion 940, with the result that the position of first sealing plate 920 in the first direction (X direction) is not readily determined.

On the other hand, in the present embodiment, since first covering portion 127 of first sealing plate 120 can be brought into abutment with first end surface 117 of case main body 110 as shown in Fig. 17, first sealing plate 120 can be readily positioned with respect to case main body 110. Thus, case main body 110 and first sealing plate 120 can be readily joined to each other. Therefore, first joining portion 140 can be stably formed.

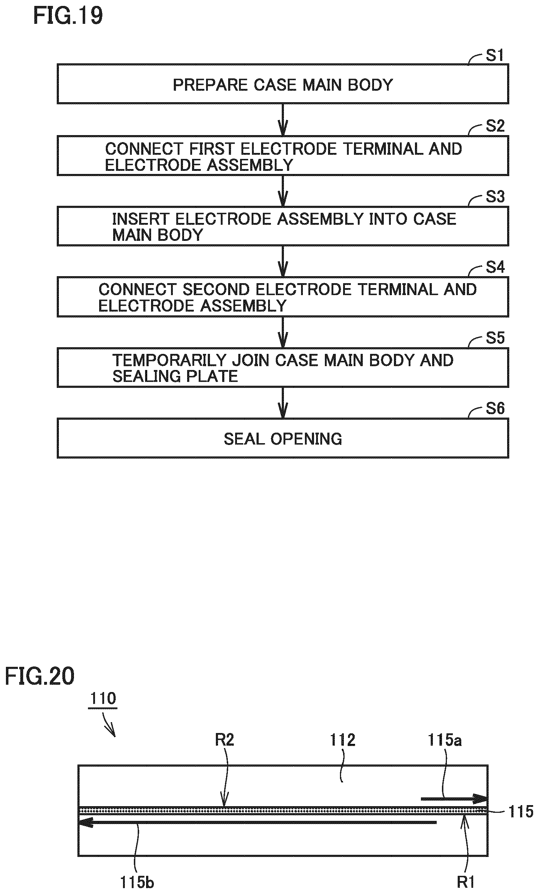

Hereinafter, a method of manufacturing the secondary battery according to the present embodiment will be described. Fig. 19 is a flowchart showing the method of manufacturing the secondary battery according to the embodiment. Fig. 20 is a bottom view showing a joining method when forming the case main body. It should be noted that each of positions of welding paths in Fig. 20 is shown to be displaced with respect to an actually welded portion in order to facilitate understanding of the welding path.

As shown in Fig. 19, in the method of manufacturing secondary battery 1 according to the present embodiment, first, the case main body is prepared (step S1). In the step (step S1) of preparing case main body 110, a plate-shaped member is folded into a tubular shape and both ends of the plate-shaped member folded into the tubular shape are joined to each other to form a prismatic-tubular-shaped member for case main body 110.

In joining the both ends of the plate-shaped member, an energy ray can be applied thereto a plurality of times to weld the both ends of the plate-shaped member. It should be noted that the application of energy ray does not necessarily need to be performed a plurality of times. In the present embodiment, the application of laser is performed twice in order to weld the both ends of the plate-shaped member. In this way, joining portion 115 is formed.

Specifically, first, in the first round of the application of laser, the laser (not shown) passes through a welding path 115a in Fig. 20 in a direction of arrow, thereby welding a first region R1 including the end portion of case main body 110 on the first side. Next, in the second round of the application of laser, the laser passes through a welding path 115b in Fig. 20 in a direction of arrow, thereby welding a second region R2 including the end portion of case main body 110 on the second side.

In welding first region R1 and second region R2, each of the end portion of case main body 110 on the first side and the end portion of case main body 110 on the second side serves as a start point or end point of the welding. In the present embodiment, each of the end portion of case main body 110 on the first side and the end portion of case main body 110 on the second side serves as the end point of the welding.

In the laser welding performed twice, a welding distance in one round of the laser welding can be longer than a welding distance in the other round of the laser welding. In the present embodiment, welding path 115b for welding second region R2 is longer than welding path 115a for welding first region R1. Thus, a distance to move from the end point of welding path 115a to the start point of welding path 115b can be shorter than that in the case where the welding distances of welding paths 115a to 115b are the same. Thus, a distance in which the laser is not applied can be shortened, thereby shortening a whole of welding time.

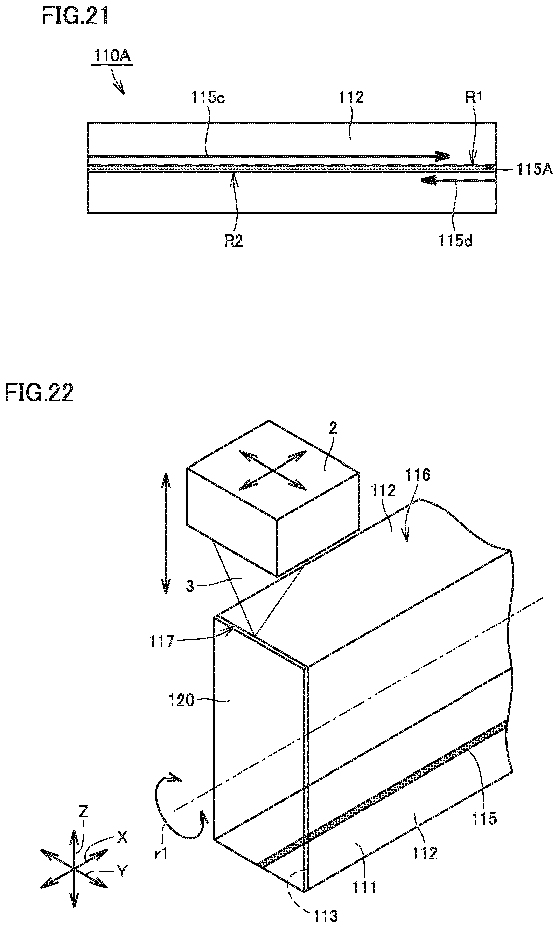

Fig. 21 is a bottom view showing a joining method when forming the case main body according to a first modification of the embodiment.

In the first round of the application of laser in the present modification, the laser (not shown) passes through a welding path 115c in Fig. 21 in a direction of arrow, thereby welding second region R2 including the end portion of case main body 110A on the second side. Next, in the second round of the application of laser, the laser passes through a welding path 115d in Fig. 21 in a direction of arrow, thereby welding first region R1 including the end portion of case main body 110A on the first side. In this way, a joining portion 115A is formed.

In the method of joining the case main body of the secondary battery according to the present modification, each of the end portion of the case main body on the first side and the end portion of the case main body on the second side serves as the start point of the welding. Thus, a molten portion during the welding can be more effectively suppressed from flowing to the opening side of case main body 110A to result in unstable abutment with the sealing plate.

Next, as shown in Fig. 19, the first electrode terminal and the electrode assembly are electrically connected (step S2). In the present embodiment, negative electrode tab group 220 of electrode assembly 200 is electrically connected to negative electrode terminal 301 (first electrode terminal) provided on first sealing plate 120, via negative electrode current collector 410.

Next, positive electrode tab group 250 of electrode assembly 200 is connected to first conductive member 430 of positive electrode current collector 420. It should be noted that this step may be performed after a below-described step S3.

Next, electrode assembly 200 is inserted into case main body 110 (step S3). As shown in Fig. 15, electrode assembly 200 is inserted into case main body 110 by inserting positive electrode current collector 420 from first opening 113.

Next, the second electrode terminal and the electrode assembly are connected (step S4). In the present embodiment, positive electrode tab group 250 of electrode assembly 200 is electrically connected to positive electrode terminal 302 (second electrode terminal) provided on second sealing plate 130, via positive electrode current collector 420.

Each of first spacer 600 and the second spacer is disposed between electrode assembly 200 and a corresponding one of sealing plates 120, 130 at an appropriate timing in the above-described step after folding the electrode tab.

Next, as shown in Fig. 19, case main body 110 and each of sealing plates 120, 130 are temporarily joined to each other (step S5).

Before the step of sealing first opening 113, the portion (first covering portion 127) to cover at least a portion of first end surface 117 is temporarily joined to first end surface 117. In the temporary joining, the sealing plate and the case main body are temporarily joined together at a point on the joining location. The temporary joining in the present embodiment is attained, for example, by joining them at one point on each of the four sides of the pair of first side surface portions 111 and the pair of second side surface portions 112. It should be noted that the temporary joining may be performed in the form of, for example, a relatively short line (for example, less than 1 cm). Further, the temporary joining may not necessarily be performed.

Fig. 22 is a perspective view showing a method of joining the case main body and the first sealing plate included in the secondary battery according to the embodiment.

Next, as shown in Fig. 22, first opening 113 is sealed (step S6). Further, second opening 114 is sealed (step S6).

At least parts of the step of sealing first opening 113 and the step of sealing second opening 114 are performed simultaneously. In the present embodiment, the step of sealing first opening 113 and the step of sealing second opening 114 are performed such that both the steps are started and ended at substantially the same time.

It should be noted that parts of the step of sealing first opening 113 and the step of sealing second opening 114 may overlap with each other. Further, these steps may be started at the same time and may not be ended at the same time, or may not be started at the same time and may be ended at the same time. When parts of these steps overlap with each other, either one of the sealing of first opening 113 and the sealing of second opening 114 may be performed first.

First opening 113 is sealed in the following manner: first sealing plate 120 is brought into abutment with first end surface 117 so as to cover at least a portion of first end surface 117 in the first direction (X direction) and a joining process is performed from the outer peripheral side around the axis in the first direction (X direction) so as to form the joining portion to bridge first sealing plate 120 and outer peripheral surface portion 116 of case main body 110.

As with the joining of first sealing plate 120, before the step of sealing second opening 114, the portion to cover at least a portion of second end surface 118 is temporarily joined to second end surface 118. Second opening 114 is sealed in the following manner: second sealing plate 130 is brought into abutment with second end surface 118 so as to cover at least a portion of second end surface 118 in the first direction (X direction) and a joining process is performed from the outer peripheral side around the axis in the first direction (X direction) so as to form the joining portion to bridge second sealing plate 130 and outer peripheral surface portion 116 of case main body 110. It should be noted that the temporary joining may not necessarily be performed.

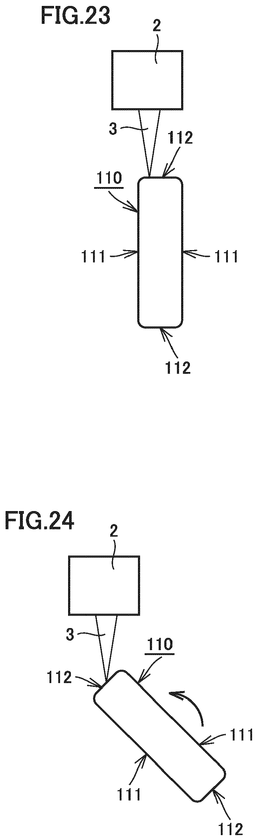

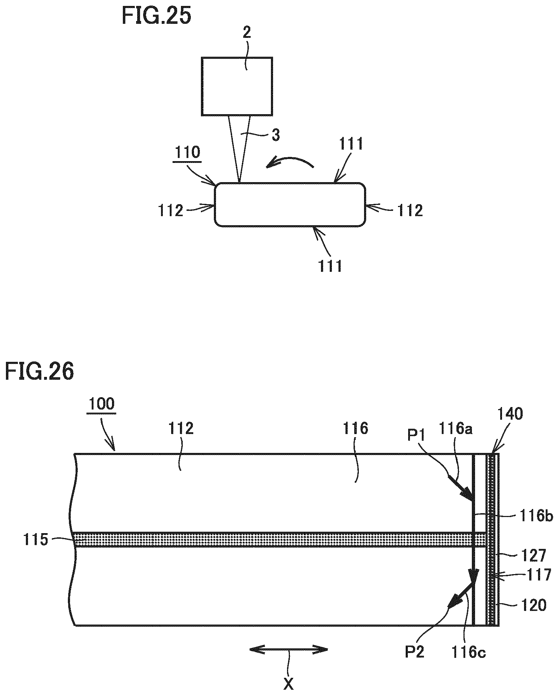

Fig. 23 is a side view showing a state immediately after the joining between the case main body and the first sealing plate is started. Fig. 24 is a side view showing a state in which short side portions of the case main body and the first sealing plate are joined to each other while rotating them. Fig. 25 is a side view showing a state in which long side portions of the case main body and the first sealing plate are joined to each other while rotating them. Fig. 26 is a bottom view showing joining paths when joining the case main body and the first sealing plate. Each of Figs. 23 to 25 shows only the case main body. Further, each of Figs. 23 to 26 illustrates the joining on the negative electrode side, and the same joining method can be employed for the joining on the positive electrode side. It should be noted that each of the positions of the welding paths in Fig. 26 is shown to be displaced with respect to an actually welded portion in order to facilitate understanding of the welding path.

As shown in Figs. 22 to 25, in at least one of the step of sealing first opening 113 and the step of sealing second opening 114, the joining process can be performed by rotating case main body 110 around the axis in the first direction (X direction) (in a direction of r1 in Fig. 22). In the present embodiment, in each of both the step of sealing first opening 113 and the step of sealing second opening 114, case main body 110 is rotated and welding is performed by laser 3. Laser 3 may be of a pulse type or a continuous-wave type.

Case main body 110 is pressed by a grasping apparatus (not shown) until case main body 110 is elastically deformed. Thus, electrode assembly 200 is sandwiched by case main body 110. Case main body 110 is pressed by the grasping apparatus at first side surface portion 111 having an area larger than that of second side surface portion 112. It should be noted that the deformation of case main body 110 is not limited to the elastic deformation. Further, insulating sheet 700 may be interposed between case main body 110 and electrode assembly 200.

In the present embodiment, case main body 110 is subjected to the joining process while continuously rotating case main body 110. A focal length of laser 3 is adjusted in conjunction with the continuous rotation of case main body 110 by moving joining apparatus 2.

As shown in Fig. 26, the laser welding is started from a position P1 displaced with respect to a boundary between outer peripheral surface portion 116 and first covering portion 127 in the first direction (X direction). The laser passes through a welding path 116a inclined at 45° or more with respect to first end surface 117 when viewed in a direction intersecting the first direction (X direction). Then, the laser is continuously applied to the boundary between outer peripheral surface portion 116 and first covering portion 127 from welding path 116a. The laser passes through a welding path 116b located at the boundary between outer peripheral surface portion 116 and first covering portion 127, thereby welding the entire periphery of case 100 in the first direction (X direction). After performing the welding on welding path 116b in a partially overlapping manner, the laser is moved through a welding path 116c to a position P2 displaced with respect to welding path 116b in the first direction (X direction), and the application of laser is stopped. By performing the laser welding in this order, the start point and end point of the welding are not included in welding path 1 16b along first end surface 117, with the result that stable heat input can be achieved in joining case main body 110 and first sealing plate 120.

It should be noted that in the present embodiment, position P1 is displaced to the case main body 110 side in the first direction (X direction) with respect to the boundary between outer peripheral surface portion 116 and first covering portion 127, but may be displaced to the first sealing plate 120 side. Further, it has been illustratively described that in the joining path of the present embodiment, the start point and end point of the welding are not included in the boundary between outer peripheral surface portion 116 and first covering portion 127; however, it is not limited to this configuration. The joining path may be configured such that at least one of the start point and end point of the welding is located at the boundary between outer peripheral surface portion 116 and first covering portion 127.

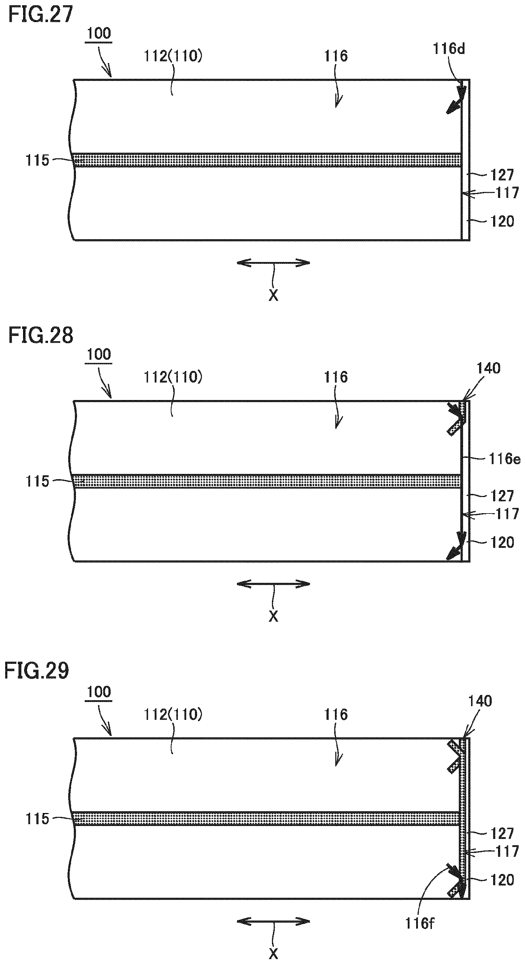

Next, a modification of the joining process by the laser welding will be described. Figs. 27 to 29 are bottom views showing first to third welding paths when joining the case main body and the first sealing plate according to the modification. Each of Figs. 27 to 29 illustrates a state in which first joining portion 140 is formed on second side surface portion 112.

First joining portion 140 according to the modification is welded by applying the laser eight times. Specifically, the laser welding is individually performed onto each of the four flat surface portions of the pair of first side surface portions 111 and the pair of second side surface portions 112 and four corner portions therebetween in outer peripheral surface portion 116. It should be noted that applying the laser a plurality of time means that scanning of the laser is performed a plurality of times, and does not mean respective amplitudes of the pulse-type laser.

As shown in Fig. 27, a part of first joining portion 140 is formed by a first welding path 116d. First welding path 116d is a path in which the laser is scanned at the boundary between outer peripheral surface portion 116 and first covering portion 127 with the rotation of case main body 110 being stopped and the application of laser is then stopped at a position displaced in the first direction (X direction).

Next, as shown in Fig. 28, after case main body 110 is rotated and stopped, a part of first joining portion 140 is formed by a second welding path 116e. Second welding path 116e is a path in which the application of laser is started from the position displaced in the first direction (X direction) with respect to the boundary between outer peripheral surface portion 116 and first covering portion 127 with the rotation of case main body 110 being stopped, the laser is scanned at the boundary between outer peripheral surface portion 116 and first covering portion 127, and the application of laser is then stopped at a position displaced in the first direction (X direction).

Next, as shown in Fig. 29, after case main body 110 is rotated and stopped, a part of first joining portion 140 is formed by a third welding path 116f. Third welding path 116f is a path in which the application of laser is started from a position displaced in the first direction (X direction) with respect to the boundary between outer peripheral surface portion 116 and first covering portion 127 with the rotation of case main body 110 being stopped and the laser is then scanned at the boundary between outer peripheral surface portion 116 and first covering portion 127.

As described above, the laser welding is performed with the rotation of case main body 110 being stopped, then case main body 110 is rotated, and next laser welding is performed with the rotation of case main body 110 being stopped. These operations are repeated eight times, thereby forming first joining portion 140. When performing the laser welding, case main body 110 is rotated by 45° such that each of the four flat surface portions or four corner portions is located immediately below the joining apparatus when viewed in the first direction (X direction). The focal length of the laser welding is changed and adjusted whenever case main body 110 is rotated. It should be noted that each of the four flat surface portions of the pair of first side surface portions 111 and the pair of second side surface portions 112 of outer peripheral surface portion 116 may be laser-welded with the rotation of case main body 110 being stopped and each of the four corner portions may be laser-welded while rotating case main body 110.

As with the above-described welding paths in the present embodiment, the start point and end point of the laser welding performed a plurality of times in the present modification are displaced in the first direction (X direction). Parts of the joining paths of the laser welding performed a plurality of times overlap with each other in the direction along first end surface 117. In the present modification, for example, respective parts of first welding path 116d and second welding path 116e overlap with each other, and respective parts of second welding path 116e and third welding path 116f overlap with each other.

In this way, first sealing plate 120 and outer peripheral surface portion 116 of case main body 110 are joined by the plurality of joining portions by applying an energy ray (laser) a plurality of times for the sake of welding. Since adjacent joining portions of the plurality of joining portions are formed such that parts of the adjacent joining portions overlap with each other, the entire periphery of case 100 in the first direction (X direction) is securely joined.

After the above-described steps, injection of the electrolyte solution into case 100 through the injection hole, or the like is performed, thereby completing secondary battery 1.

Hereinafter, a secondary battery according to a second modification of the embodiment will be described. Since the secondary battery according to the present modification differs from secondary battery 1 according to the embodiment of the present technology in terms of the joining structure between the case main body and the sealing plate, the same configuration as that of secondary battery 1 according to the embodiment of the present technology will not be described repeatedly.

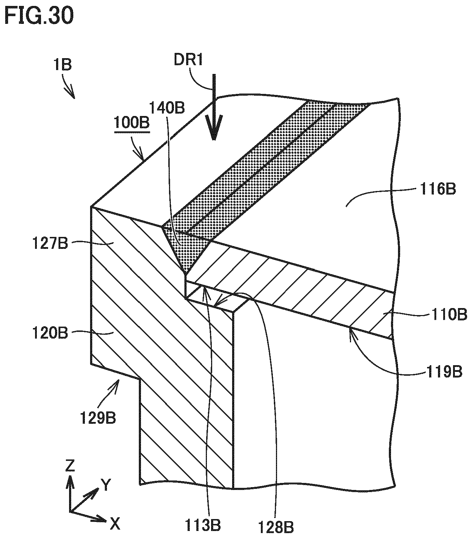

Fig. 30 is a perspective view showing a joining state between the case main body and the first sealing plate included in the secondary battery according to the second modification of the embodiment.

A secondary battery 1B according to the present modification includes a case 100B. Case 100B includes a case main body 110B and a first sealing plate 120B.

Case main body 110B has an inner peripheral surface portion 119B. Inner peripheral surface portion 119B extends around an axis in the first direction (X direction).

First sealing plate 120B has a first covering portion 127B and a first portion 128B. First covering portion 127B covers an end portion of case main body 110B on the first side in the first direction (X direction). First portion 128B is located on the inner side of case main body 110B with respect to first opening 113, and faces inner peripheral surface portion 119B of case main body 1 10B. First joining portion 140B is formed to bridge first sealing plate 120B and outer peripheral surface portion 116B.

First joining portion 140B is a welding portion formed by laser welding. In the step of sealing first opening 113B, first sealing plate 120B and first end surface 117 of case main body 110B are welded to each other by applying laser from the outer peripheral side (DR1 direction in Fig. 30) around the axis in the first direction (X direction).

Since first portion 128B is disposed to fit into inner peripheral surface portion 119B of case main body 110B, the position of first sealing plate 120B is further stabilized with respect to case main body 110B. As a result, the laser welding can be stably performed.

A protrusion 129B is provided on an outer surface of first sealing plate 120B. Protrusion 129B is provided adjacent to first covering portion 127B. Thus, surroundings around first covering portion 127B of first sealing plate 120B can be suppressed from being excessively melted during the laser welding to cause dripping of the weld or the like on the outer surface side.

It should be noted that Fig. 30 shows the configuration on the negative electrode side; however, the same structure as the structure on the negative electrode side can also be employed for the positive electrode side. Further, the second sealing plate can have the same configuration as that of first sealing plate 120B. Specifically, the second sealing plate has a second portion (not shown). The second portion is located on the inner side of the case main body with respect to the second opening and faces inner peripheral surface portion 119B of the case main body. The second joining portion is a welded portion formed by laser welding. The second sealing plate and outer peripheral surface portion 116B of case main body 110B are welded to each other.

When forming first joining portion 140B and the second joining portion by the laser welding, even if the laser enters inner peripheral surface portion 119B of case main body 110B from the outer peripheral side (DR1 direction in Fig. 30) around the axis in the first direction (X direction), the laser can be received by first portion 128B, thereby suppressing penetration of the laser during the laser welding.

In each of secondary battery 1 and the method of manufacturing secondary battery 1 according to the embodiment of the present technology, since first sealing plate 120 is disposed in abutment with first end surface 117 of case main body 110 and case main body 110 and first sealing plate 120 are joined to each other, first sealing plate 120 can be stably positioned with respect to case main body 110 in the first direction (X direction) as compared with a case where first sealing plate 120 is inserted on the inner peripheral side of the case main body and the case main body and the sealing plate are joined to each other, with the result that the joining state of the joining portion can be stabilized. Thus, it is possible to improve reliability of first joining portion 140 that joins case main body 110 and first sealing plate 120. Also, when second sealing plate 130 employs the same configuration as that of first sealing plate 120, reliability of second joining portion 141 can be improved on the second sealing plate 130 side.

In secondary battery 1 according to the embodiment of the present technology, since case main body 110 is joined by joining portion 115 extending in the first direction (X direction), one metal plate can be folded and the folded end portions can be joined to each other, with the result that case main body 110 can be efficiently manufactured. Further, since each of joining portion 115, first joining portion 140, and second joining portion 141 is disposed on the outer peripheral side of case main body 110, joining portion 115 can be formed from the outer peripheral side of case main body 110 by one joining apparatus, with the result that case 100 can be joined efficiently.

In secondary battery 1 according to the embodiment of the present technology, since the energy density of electrode assembly 200 can be improved by providing negative electrode tab group 220 (first electrode tab group) and positive electrode tab group 250 (second electrode tab group) of electrode assembly 200, the secondary battery can be formed to have an excellent output characteristic.

In secondary battery 1 according to the embodiment of the present technology, since negative electrode terminal 301 (first electrode terminal) is formed on first sealing plate 120 and positive electrode terminal 302 (second electrode terminal) is formed on second sealing plate 130, the height of the secondary battery can be low when secondary battery 1 is mounted such that a part of the peripheral surface portion of case main body 110 serves as the bottom surface.

In secondary battery 1 according to the embodiment of the present technology, electrode assembly 200 and each of first sealing plate 120 and second sealing plate 130 can be avoided by first spacer 600 and the second spacer from being located too close to each other. Thus, electrode assembly 200 is not disposed immediately below the joining location between each of sealing plates 120, 130 and case main body 110, with the result that electrode assembly 200 can be suppressed from being damaged even if the laser enters the inside of case 100 from between each of sealing plates 120, 130 and case main body 110.

In the modification of secondary battery 1 according to the embodiment of the present technology, since each of the sealing plates is provided with the portion (first portion 128B and the second portion) facing inner peripheral surface portion 119B of case main body 110B, each of first portion 128B and the second portion of the sealing plates can receive the laser even when the laser passes from the welding position to the inner peripheral surface portion 119B side of case main body 110B during the welding of the sealing plate and case main body 110B, with the result that penetration of the laser during the welding can be prevented.

In the method of manufacturing secondary battery 1 according to the embodiment of the present technology, each of joining portion 115, first joining portion 140, and second joining portion 141 can be formed from the outer peripheral side around the axis in the first direction (X direction), with the result that case 100 can be manufactured efficiently.

In the method of manufacturing secondary battery 1 according to the embodiment of the present technology, the laser that joins case main body 110 and each of sealing plates 120, 130 is applied a plurality of times to distribute heat input in case main body 110, thereby reducing a thermal influence on case main body 110. Further, when the laser is applied a plurality of times, the stroke of the laser can be shortened, thus resulting in a reduced size of the joining apparatus.

In the method of manufacturing secondary battery 1 according to the embodiment of the present technology, the laser is applied a plurality of times and each of both the first end portion and the second end portion of joining portion 115 serves as the start point or end point of the welding. Thus, joining portion 115 can be stably formed with the joining states of the first end portion and the second end portion being the same as compared with a configuration in which joining portion 115 is formed by performing the joining once and the joining states of the first end portion and the second end portion of joining portion 115 are not the same at the start point or end point of the welding.

In the method of manufacturing secondary battery 1 according to the embodiment of the present technology, since first joining portion 140 and second joining portion 141 can be formed while rotating case main body 110, joining apparatus 2 can be downsized as compared with a configuration in which case main body 110 is stopped and the joining apparatus is moved around case main body 110, with the result that secondary battery 1 can be efficiently manufactured.

In the method of manufacturing secondary battery 1 according to the embodiment of the present technology, case main body 110 is grasped by the manufacturing apparatus to such an extent that electrode assembly 200 can be sandwiched by case main body 110, and electrode assembly 200 can be accordingly avoided from being moved inside case main body 110 when performing the joining while rotating case main body 110, thereby suppressing damage of electrode assembly 200.

In the method of manufacturing secondary battery 1 according to the embodiment of the present technology, since the temporary joining is performed before case main body 110 and sealing plates 120, 130 are joined, a positional displacement between case main body 110 and each of sealing plates 120, 130 can be suppressed when performing the joining while rotating case main body 110.

In the method of manufacturing secondary battery 1 according to the embodiment of the present technology, secondary battery 1 can be efficiently manufactured by simultaneously forming first joining portion 140 and second joining portion 141.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery (1) comprising:
an electrode assembly (200) including a first electrode (210) and a second electrode (240) having a polarity different from a polarity of the first electrode (210); and
a case (100) that accommodates the electrode assembly (200), wherein
the case (100) includes
a case main body (110) provided with a first opening (113) and a second opening (114), the first opening (113) being located at an end portion of the case main body (110) on a first side in a first direction, the second opening (114) being located at an end portion of the case main body (110) on a second side opposite to the first side in the first direction,
a first sealing plate (120) that seals the first opening (113), and
a second sealing plate (130) that seals the second opening (114),
the case main body (110) has an outer peripheral surface portion (116), a first end surface (117), and a second end surface (118), the outer peripheral surface portion (116) extending around an axis in the first direction, the first end surface (117) being located at the end portion of the case main body (110) on the first side, the first end surface (117) extending in a direction intersecting the first direction, the second end surface (118) being located at the end portion of the case main body (110) on the second side, the second end surface (118) extending in the direction intersecting the first direction,
the first sealing plate (120) has a first covering portion (127) that covers at least a portion of the first end surface (117) in the first direction,
the second sealing plate (130) has a second covering portion (137) that covers at least a portion of the second end surface (118) in the first direction,
a first joining portion (140) is formed to bridge the outer peripheral surface portion (116) and the first covering portion (127), and
a second joining portion (141) is formed to bridge the outer peripheral surface portion (116) and the second covering portion (137).

2. The secondary battery (1) according to claim 1, wherein the case main body (110) has a joining portion (115) extending on the outer peripheral surface portion (116) in the first direction.

3. The secondary battery (1) according to claim 1 or 2, wherein
the electrode assembly (200) includes
a main body portion,
a first electrode tab group (220) electrically connected to the first electrode (210) and located on the first side with respect to the main body portion, and
a second electrode tab group (250) electrically connected to the second electrode (240) and located on the second side with respect to the main body portion.

4. The secondary battery (1) according to any one of claims 1 to 3, comprising:
a first electrode terminal (301) electrically connected to the first electrode (210) and attached to the first sealing plate (120); and
a second electrode terminal (302) electrically connected to the second electrode (240) and attached to the second sealing plate (130).

5. The secondary battery (1) according to any one of claims 1 to 4, comprising:
a first spacer (600) located between the electrode assembly (200) and the first sealing plate (120); and
a second spacer located between the electrode assembly (200) and the second sealing plate (130).

6. The secondary battery (1) according to any one of claims 1 to 5, wherein the case main body (110B) has an inner peripheral surface portion (119B) extending around the axis in the first direction,
the first sealing plate (120B) has a first portion (128B) located on an inner side of the case main body (110B) with respect to the first opening (113B) and facing the inner peripheral surface portion (119B) of the case main body (110B),
the second sealing plate (130) has a second portion located on the inner side of the case main body (110B) with respect to the second opening (114) and facing the inner peripheral surface portion (119B) of the case main body (110B), and
each of the first joining portion (140B) and the second joining portion (141) is a welded portion.

7. A method of manufacturing a secondary battery (1), the method comprising:
preparing (S1) a case main body (110) provided with a first opening (113), a second opening (114), an outer peripheral surface portion (116), a first end surface (117), and a second end surface (118), the first opening (113) being located at an end portion of the case main body (110) on a first side in a first direction, the second opening (114) being located at an end portion of the case main body (110) on a second side opposite to the first side in the first direction, the outer peripheral surface portion (116) extending around an axis in the first direction, the first end surface (117) being located at the end portion of the case main body (110) on the first side, the first end surface (117) extending in a direction intersecting the first direction, the second end surface (118) being located at the end portion of the case main body (110) on the second side, the second end surface (118) extending in the direction intersecting the first direction;
inserting an electrode assembly (200) into the case main body (110), the electrode assembly (200) including a first electrode (210) and a second electrode (240) having a polarity different from a polarity of the first electrode (210);
sealing (S6) the first opening (113) by bringing a first sealing plate (120) into abutment with the first end surface (117) so as to cover at least a portion of the first end surface (117) in the first direction and performing a joining process from an outer peripheral side around the axis in the first direction so as to form a joining portion (140) to bridge the first sealing plate (120) and the outer peripheral surface portion (116) of the case main body (110); and
sealing (S6) the second opening (114) by bringing a second sealing plate (130) into abutment with the second end surface (118) so as to cover at least a portion of the second end surface (118) in the first direction and performing a joining process from the outer peripheral side around the axis in the first direction so as to form a joining portion (141) to bridge the second sealing plate (130) and the outer peripheral surface portion (116) of the case main body (110).

8. The method of manufacturing the secondary battery (1) according to claim 7, wherein the case main body (110) is formed by folding a plate-shaped member into a tubular shape and joining both ends of the plate-shaped member folded into the tubular shape.

9. The method of manufacturing the secondary battery (1) according to claim 8, wherein the joining of the both ends of the plate-shaped member includes performing welding by applying an energy ray a plurality of times.

10. The method of manufacturing the secondary battery (1) according to claim 8, wherein
the joining of the both ends of the plate-shaped member includes performing welding by applying an energy ray a plurality of times,
the performing of the welding by applying the energy ray a plurality of times includes
welding a first region (R1) including the end portion of the case main body (110) on the first side, and
welding a second region (R2) including the end portion of the case main body (110) on the second side,
in the welding of each of the first region (R1) and the second region (R2), each of the end portion of the case main body (110) on the first side and the end portion of the case main body (110) on the second side serves as a start point or end point of the welding,
when the end portion of the case main body (110) on the first side serves as the start point of the welding, the end portion of the case main body (110) on the second side serves as the start point of the welding, and
when the end portion of the case main body (110) on the first side serves as the end point of the welding, the end portion of the case main body (110) on the second side serves as the end point of the welding.

11. The method of manufacturing the secondary battery (1) according to any one of claims 7 to 10, wherein in the sealing (S6) of the first opening (113), the forming of the joining portion (140) includes performing welding by applying an energy ray a plurality of times.

12. The method of manufacturing the secondary battery (1) according to claim 11, wherein
the first sealing plate (120) and the case main body (110) are joined to each other by a plurality of the joining portions (140) by performing welding by applying an energy ray a plurality of times, and
adjacent joining portions of the plurality of the joining portions (140) are formed such that parts of the adjacent joining portions overlap with each other.

13. The method of manufacturing the secondary battery (1) according to any one of claims 7 to 12, wherein at least one of the sealing (S6) of the first opening (113) and the sealing (S6) of the second opening (114) includes rotating the case main body (110) around the axis in the first direction.

14. The method of manufacturing the secondary battery (1) according to claim 13, wherein at least one of the sealing (S6) of the first opening (113) and the sealing (S6) of the second opening (114) includes pressing the case main body (110) until the case main body (110) is deformed, and sandwiching the electrode assembly (200) by the case main body (110).

15. The method of manufacturing the secondary battery (1) according to claim 13 or 14, comprising:
temporarily joining (S5) the first sealing plate (120) and the case main body (110) to each other before the sealing (S6) of the first opening (113); and
temporarily joining (S5) the second sealing plate (130) and the case main body (110) to each other before the sealing (S6) of the second opening (114).

16. The method of manufacturing the secondary battery (1) according to any one of claims 7 to 15, wherein at least parts of the sealing (S6) of the first opening (113) and the sealing (S6) of the second opening (114) are performed simultaneously.

17. The method of manufacturing the secondary battery (1) according to any one of claims 7 to 16, wherein
the case main body (110B) has an inner peripheral surface portion (119B) extending around the axis in the first direction,
the first sealing plate (120B) has a first portion (128B) located on an inner side of the case main body (110B) with respect to the first opening (113B) and facing the inner peripheral surface portion (119B) of the case main body (110B),
the second sealing plate (130) has a second portion located on the inner side of the case main body (110B) with respect to the second opening (114) and facing the inner peripheral surface portion (119B) of the case main body (110B), and
in the sealing (S6) of the first opening (113B) and the sealing (S6) of the second opening (114), the first sealing plate (120B) and the case main body (110B) are welded to each other and the second sealing plate (130) and the case main body (110B) are welded to each other by applying an energy ray from the outer peripheral side around the axis in the first direction.
